(19) Europäisches Patentamt
European Patent Office
Office européen des brevets

(11) EP 0 688 085 B1

(12) **EUROPEAN PATENT SPECIFICATION**

(45) Date of publication and mention
of the grant of the patent:
**15.07.1998 Bulletin 1998/29**

(51) Int Cl.6: **H02J 13/00**, G05D 23/19, F24D 19/10

(21) Application number: **94401360.6**

(22) Date of filing: **17.06.1994**

(54) **Method of controlling the temperature in a building using energy supply tariff change information to minimise costs**

Verfahren zur Temperaturregelung in einem Gebäude unter Verwendung von Energiepreisänderungsinformationen, um Kosten zu minimieren

Méthode de contrôle de la température dans un bâtiment utilisant l'information concernant les changements de tarif d'énergie pour minimiser les frais

(84) Designated Contracting States:
**ES FR GB SE**

(43) Date of publication of application:
**20.12.1995 Bulletin 1995/51**

(73) Proprietor: **SCHLUMBERGER INDUSTRIES S.A. 92120 Montrouge (FR)**

(72) Inventors:
- **Afshari, Afshin**
  **F-92190 Meudon (FR)**
- **Georgescu, Cristian**
  **F-75012 Paris (FR)**

(74) Representative: **Hawkes, David John Schlumberger Industries S.A., Centre de Recherche/SMR, B.P. 620-05 92542 Montrouge Cédex (FR)**

(56) References cited:
WO-A-94/10620        FR-A- 2 582 788
FR-A- 2 699 261      GB-A- 2 218 540
US-A- 5 115 967      US-A- 5 274 571

- IEEE TRANSACTIONS ON POWER SYSTEMS, vol.6, no.4, November 1991, NEW YORK US pages 1356 - 1365 B. DARYANIAN ET AL. 'AN EXPERIMENT IN REAL TIME PRICING FOR CONTROL OF ELECTRIC THERMAL STORAGE SYSTEMS'

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a method for controlling the internal temperature of a building.

The simplest existing central heating systems using feed-back regulation, simply maintain the temperature of the building at a fixed value defined by and maintained by a thermostat or by a lcal control device using a simple control algorithm such as PID (Proportional Integral Derivative). The value of this preset temperature can have a preset programmed time variation that is controlled by a real time clock in order to reflect the occupancy of the building and any tariff changes. More advanced open loop heating control systems maintain a desired internal temperature set point based on factors such as the building heating load estimated from the measured or predicted value of external temperature and an evaluation of thermal capacity of the building. Recently, more sophisticated predictive temperature control systems have been developed which predict the resulting internal temperature of a building over a fixed period of time, usually 24 hours, based on possible heating strategies and select the heating strategy which maintains a desired internal temperature setpoint.

From such predictive control systems the idea of preheating has arisen where, sometime before a desired change in the internal temperature setpoint, the system starts heating the building. Due to the thermal inertia of the building the building will in fact reach the new temperature at the desired time, rather than some time after (as is the case with simple non-predictive feed-back systems). Such control systems using preheating maintain the internal temperature such that it never falls below the value of a defined temperature setpoint, but is as close as possible to this value in order to minimise energy consumption. The temperature of the building is only raised above this value in order to compensate for the thermal inertia of the building when a change in the temperature setpoint approaches.

To date, temperature control systems have tended to focus on the minimisation of energy consumption. However, in the case where the system is powered from an energy source that is subject to changes of tariff, it is not always the case that the heating control implemented to minimise energy consumption will result in an economical solution for the consumer. Furthermore, such systems tend to provide no advantages to the utilities in terms of shifting of the load between periods of high and low demand since no tariff information (which effectively reflects the demand periods) is incorporated in their control strategy.

In order to try to help minimise peak demand, control systems have been proposed in the past using some elements of tariff information. In particular, one control strategy proposed by Electricité de France (EDF) commands the system to provide full power for a fixed period of an hour before a low to high tariff change, if the tariff change occurs at a time close to programmed increase in the temperature setpoint. This system, whilst providing certain advantages to the utility relating to the spreading of the peak load, is relatively unsophisticated and, in use, results in a certain degree of discomfort to the user due to uncontrollably high temperatures being reached prior to the tariff change and less than ideal energy consumption by the device and costs to the user.

Thus, it is an object of the present invention to provide an energy control strategy that guarantees a minimal level of comfort to the user whilst minimizing costs and avoiding unnecessary loading during peak periods.

US-A-5115967 discloses a classic predictive heating control system having the elements of the precharacterising part of claim 1 of this application and which minimises energy consumption whilst ensuring that the temperature never drops below a given setpoint. There is no discussion of minimisation of cost. US-A-5 274 571 discloses a system for controlling the storage of heat in a central heat storage connected to a plurality of buildings. An energy storage scheduler is given energy tariff information and controls charging of the energy storage device to achieve a minimal cost supply.

The method of the present invention is characterised through the use of a central control device which receives information regarding tariff changes in the energy supply and controls thermal units to maintain the internal temperature between lower and upper temperature setpoints and according to a control strategy that results in a minimised cost during a period of time.

The introduction of an upper temperature setpoint, up to which the building can be heated without causing discomfort to the user, enables the system, if desirable in terms of cost, to heat the building above the lower minimum comfort setpoint but avoids temperatures above a maximum comfortably supportable value from being reached. For example, when a low to high tariff change occurs within the period of time studied it may be advantageous in terms of cost to operate the system at high power for a short period of time before the tariff and to then cut the power at the instant of the tariff change. Thus, the building is heated to the maximum comfortably supportable temperature before the change i.e. during the cheap tariff period, this heat being stored by the building structure for diffusion during the high tariff period. After the tariff change and when the power is cut the temperature drops slowly until the lower temperature setpoint is reached and it becomes necessary to restart the heating. Thus, cost is minimised whilst avoiding the problems of overheating the building to uncomfortable levels.

In practice, the calculated duration of the time at which the system is operated at the high temperature setpoint will depend, for example, on such factors as the ratio of the price of energy between the tariff changes and whether heating will in fact be required during the high tariff period, based on the prediction of the heating required to maintain the building temperature within the lower and upper setpoints.

Defining a comfort region bound by two temperature setpoints helps avoid the problems of undesirably high temperatures of the EDF solution described above, since the building is always kept within the boundaries of this region, whilst enabling economical solutions to be reached within these boundaries. Similarly, the use of tariff change information leads to solutions that tend to avoid heating at peak load times.

The lower and upper temperature setpoints can simply be fixed to values which are constant at all times, for example, to 21 and 23 degrees centigrade. However, preferably, either one or both of the lower and upper temperature setpoints are programmable values which may vary over the period of time of prediction performed by the central device, for example, to reflect the occupancy of the building. For example, there may be provided several scheduled patterns during 24 hours, corresponding to different types of days, working days, weekends etc. Typically, the lower temperature setpoint will be given a lower value during periods of likely inoccupancy, whilst the upper temperature setpoint may be given a fixed value for all times.

The prediction of the internal temperature of the building that will result from the application of varying heating strategies can be performed using any conventional dynamic models describing the evolution of the internal building temperature as a function of the measured or predicted external temperature, the calculated or estimated thermal inertia of the building, the heating or cooling power of the thermal units, heat losses in the building etc. Such classical prediction methods using differential equations to describe the building response are well known in the art.

In principal the central control device can operate to calculate the internal temperature in response to all possible heating control strategies during the period of time in question and select those which predict an internal temperature being within the upper and lower temperature setpoints during this period and which result in the most economical solution to the consumer. However, this method is costly in terms of processor time of the central controller and is impractical to implement.

The central control device can also undertake the calculation of the optimal control strategy as the solution of an optimal control problem considered as a mathematical programming problem, using algorithms suited for the minimization under inequality constraint. Some known algorithms that could be used are Simplex or Sequential Quadratic Programming (SQP) for linear systems with linear constraints and with a linear (or quadratic) cost function. However the memory requirements for the implementation of these algorithms are in general too great, and the time required for the solution to converge to the optimal solution is greater than the interval of time that can be allocated for the computation in the controller of the central device.

In general, in heating and cooling systems, a central control transmits a control parameter to a thermal unit which directly corresponds to the desired temperature of that unit, the thermal unit then using thermostatic control or simple control algorithms such as "dead-beat control" to maintain the unit at that temperature.

Preferably, the central control device firstly operates to calculate the internal temperature resulting from a control parameter sent to the thermal units directly corresponding to the low temperature setpoint, that is, not taking into account any thermal inertia effects of the building but simply assuming that the temperature of the building will instantly follow the temperature of the thermal unit. Assuming some thermal inertia of the system and some change in the lower temperature setpoint then the predicted temperature will undoubtedly fall below the lower temperature setpoint and the control device then recalculates the internal temperature using alternative values of the first control parameter until such a time as there is no longer any violation of the comfort region defined by the lower and upper setpoints. Thus, a preheating control parameter is defined. Starting from the value of the control parameter corresponding directly to the lower temperature setpoint enables a more intelligent search for a minimal cost control strategy and avoids unnecessary calculation of unfeasible heating programs.

Thus, this embodiment provides an algorithm that computes the optimal heating strategy using reduced computational resources (memory and computing time) so as to allow an implementation on a real time controller. The algorithm provides, in the early stages of computations, heating strategies that respect the comfort boundaries and, based on these strategies, an optimal strategy is sought. If an accidental interruption of the computations happens before the optimal solution is available, the most recently calculated intermediate strategy can be sent to the thermal units and implemented without violating the comfort boundaries.

In one embodiment, the control device predicts the effect on the internal temperature resulting from sending a control value corresponding to a higher value of the lower temperature setpoint a given period of time before the desired change in the internal temperature. If the predicted temperature still falls below the lower temperature setpoint, the time before the lower setpoint change during which this high control value is sent to the thermal unit is lengthened until sufficient preheating is carried out, that is, until the internal temperature is predicted to be above the lower temperature setpoint for the minimum energy consumption.

Once a value of the control parameter sufficient to maintain the internal temperature above the lower temperature setpoint at a minimum energy consumption has been calculated, the control device recalculates the predicted internal temperature and also the cost to the user for alternative control parameter values starting from the calculated preheating control parameter and using information relating to the time and cost of the tariff changes until a control parameter resulting in a minimum or low cost operation of the thermal units is arrived at.

For example, in one embodiment, the control device, starting from the preheating control parameter, adjusts this value such that, for a given period of time before a change of tariff from a low to high value, the control value corresponds to the upper temperature setpoint. The value of the predicted internal temperature and the cost to the user, based on the tariff cost information is then evaluated. After this, the predicted values of temperature and cost assuming a control value set to the maximum temperature setpoint for a longer given period of time before the tariff change are calculated and this process is repeated until the cost reaches a minimum or predetermined low value. By this means, similar to the control steps carried out to determine the preheating control parameter for preheating of the building, excess heating of the building prior to a tariff change to store thermal energy prior to a tariff change is forced.

The control parameter eventually selected can be that corresponding to the absolute minimum cost evaluated or any parameter corresponding to a predetermined low cost value. The search for a minimal cost solution can be stopped, for example, when the calculated cost has dropped below a minimum value, or when the reduction in cost for gradually lengthening periods of heating before the tariff has ceased to change significantly between subsequently tested periods.

Advantageously, the calculation of the internal temperature and cost is only carried out until such a time after the tariff change that the predicted internal temperature of the building is equal to the predicted internal temperature for the application of the preheating control parameter. After this time, the system has essentially stabilized and the building will henceforth be heated in the same way for the preheating strategy, that is, such that the temperature of the building follows the lower temperature setpoint. In this manner, unnecessary recalculation of predicted values is avoided.

In a preferable embodiment, in which the central control device as part of the prediction of internal temperature also predicts a value representing the temperature of the structure of the building, the control device can operate such that the calculation of the internal temperature and cost is only carried out until such a time after the tariff change that both the predicted internal temperature and the predicted temperature of the structure of the building are equal to the values calculated for the application of the preheating control parameter. This calculation, based on the introduction of a structure temperature, is more reliable as any differences in the structure temperature can be reflected in variations in the internal temperature sometime afterwards.

There will now be described, by way of example only, an embodiment of the present invention with reference to the accompanying drawings, in which :

Fig. 1 shows the physical elements of a heating system which uses the method according to the present invention;

Fig. 2 represents the building model used to predict the internal temperature of the building in response to control strategies implemented by the method of the invention;

Fig. 3 represents the upper and the lower temperature setpoints as used in the present invention for a variety of possibilities, reflecting the occupancy of the building and the comfort to the user;

Fig 4. represents the basic control strategy, the preheating strategy and the cost optimising strategy implemented by the present invention;

Fig. 5 shows the results of a test of a heating system operating according to the method of the present invention.

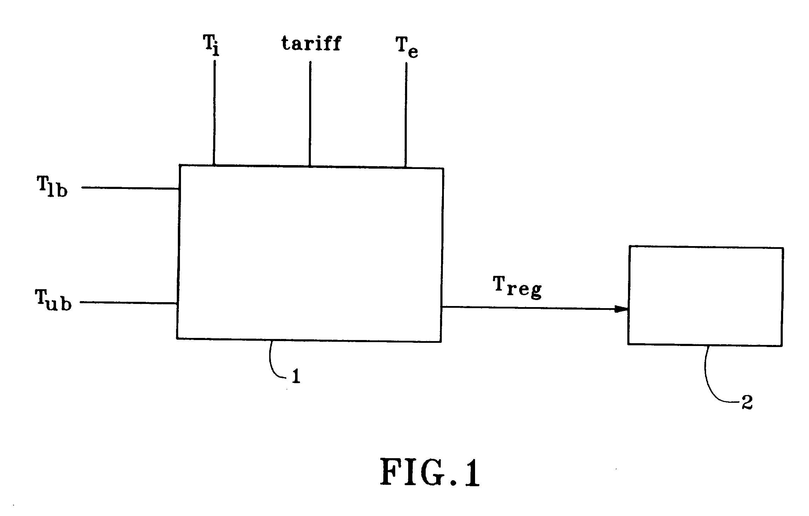

Referring to Fig. 1, the heating system comprises a central control device 1 which may be implemented by means of a PC or any other microcontroller architecture and which includes a microprocessor, real time clock, input/output devices etc. and which controls a heating device 2, such as an electric radiator. The central control device receives information representing the internal temperature of the building $Ti$, the external temperature $Te$, the changes in tariff of the energy source used by the heating device and the programmed values $Tlb$ and $Tub$, representing the lower and upper temperature setpoints and which define the minimum and maximum temperatures acceptable to a user over a period of time. The tariff information can be preprogrammed via a user interface or received via, for example, radio signals. Similarly, the value of the external temperature can be read from a temperature sensor or can be a predicted or programmed value. From this information, the central control device outputs a command parameter $Treg$ which is used to control the heating device. The central controller should be provided with sufficient information regarding the behaviour of the heating device in response to the parameter $Treg$ in particular in terms of the power it will consume in response to such a parameter in order to enable a cost calculation to be carried out.

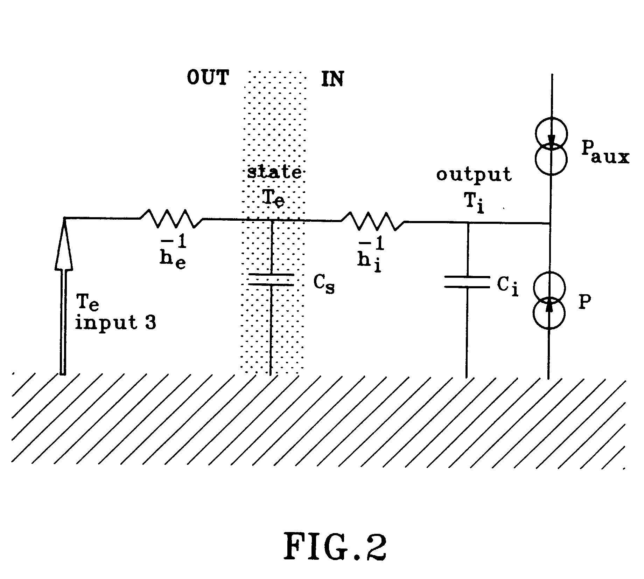

Fig. 2 shows the model of the building used by the central control unit in predicting the internal temperature of the building, where $Te$ represents the external temperature, $he$ represents the conductivity of the building structure in terms of the conduction of heat from the building structure to the outside, $Ts$ represents the temperature of the building structure, $Cs$ the capacity of the building structure to store heat, $hi$ the conductivity of the building to absorb heat from the heating device, $he$ the conductivity of the building in relation to the loss of heat from the building externally, $Ci$ the thermal capacity of the heating device, $Ti$ the internal temperature, $P$ the power supplied to the heating device and Paux the other sources of heat to the building such as heat produced in cooking, heat from the occupants or solar radiation. The model is of a conventional type and the parameters not directly measured, such as Ts, can be calculated by use of conventional models. The control device simulates the behaviour of the building according to the equations :

$$C_i \frac{d}{dt} T_i = h_i \cdot (T_s - T_i) + P + P_{aux}$$

$$C_s \frac{d}{dt} T_s = h_i \cdot (T_i - T_s) + h_e \cdot (T_e - T_s)$$

$$(1)$$

In predicting the internal temperature of the building the control device may use this model or a simplified model of the system, which does not use the structure temperature and which uses a single constant h representing the conductivity of the building :

$$C \frac{d}{dt} T_i = h \cdot (T_e - T_i) + P + P_{aux}$$

$$(2)$$

The above equations represent the model of the evolution of internal temperature in continuous time. In a digital implementation the algorithms used are the discretized models :

$$C_i \frac{\Delta T_i}{\Delta t} = h_i \cdot (T_s - T_i) + P + P_{aux}$$

$$C_s \frac{\Delta T_s}{\Delta t} = h_i \cdot (T_i - T_s) + h_e \cdot (T_e - T_s)$$

$$(3)$$

and

$$C \frac{\Delta T_i}{\Delta t} = h \cdot (T_e - T_i) + P + P_{aux}$$

$$(4)$$

The optimization is performed in an interval of time less than the sampling time. In general, the time between sampling intervals will be between 6 to 12 minutes. The time interval used to discretize the system for the prediction can be equal to the sampling time or can be extended, for example, to around 30 minutes.

As discussed in general in the introduction, the central controller predicts the internal temperature of the building over a prediction period of time of 24 hours as it will evolve in response to the heating output Treg sent to the heating device and dependent on the factors described above. The external temperature may be predicted over a 24 hour period, based on previous historical data, or may be simply set to a fixed value. The central controller also receives a lower and upper temperature setpoint Tlb and Tub which define the minimum and maximum temperatures acceptable to an occupant of the building over the prediction period. The area between these values is defined as the comfort region.

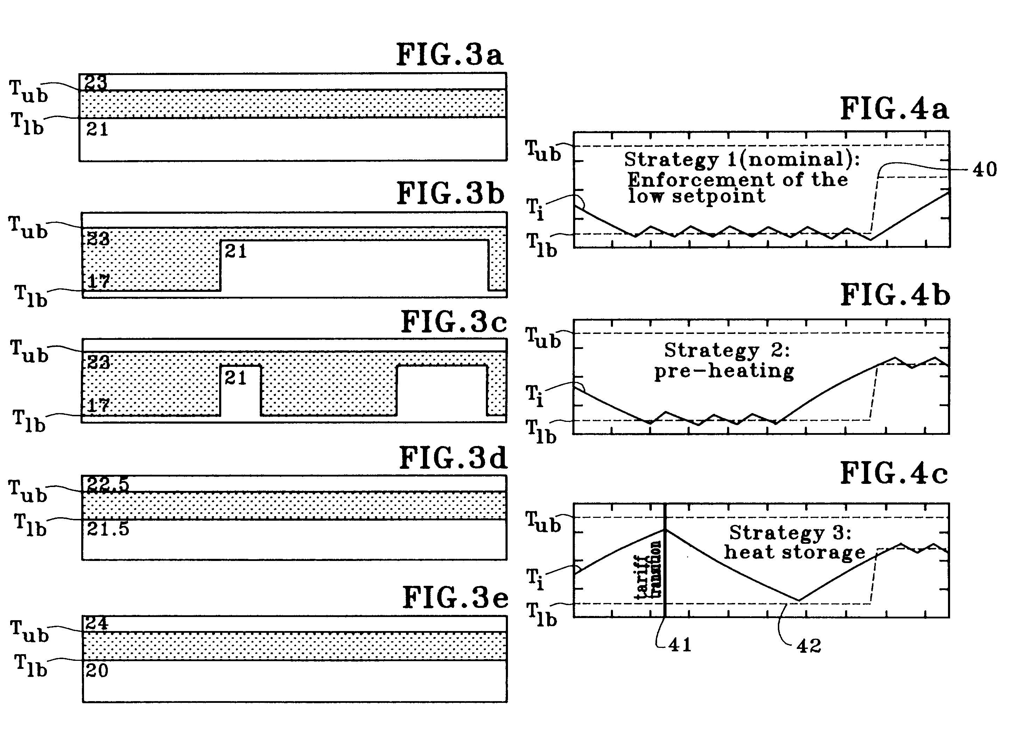

Referring to Fig. 3., various possible programmable values of the upper and lower setpoint over the prediction period are shown. Fig. 3a shows one of the simplest comfort regions, in which the upper and lower setpoints are constant and fixed at 23°c and 21°c over the prediction period. Fig. 3b shows a variation where the lower temperature setpoint is set at 17°c for likely periods of inoccupancy and at night and 21°c for periods when a level of comfort is required. Other variations reflecting alternative comfort requirements are shown in Figs 3c to 3e.

In operation, the central controller controls the heating device such that, at all times, the predicted internal temperature will lie within the comfort region. The control also uses the tariff information to calculate the cost to the occupant in implementing various control parameters and then chooses the minimum cost alternative. In carrying out this prediction, the control device proceeds in three stages, starting from a prediction of internal temperature resulting from a control parameter corresponding simply to the lower temperature setpoint Tlb, then calculating a control parameter Tmod which ensures preheating and that the temperature never falls below the lower setpoint, and finally calculating an optimum control parameter Topt which provides minimum cost to the user based on the tariff changes. This optimum control parameter is then output as the control parameter Treg.

Referring to Fig. 4, the first prediction at Fig. 4a calculates the internal temperature that will result from application of a control parameter corresponding to the lower temperature setpoint. As to be expected, the predicted internal temperature in fact falls below the lower temperature setpoint at the point of increase 40 of the setpoint, due to thermal inertia of the building. The control devices then calculates a preheating control parameter Tmod which compensates for this change and ensures that the internal temperature rests within the comfort region as shown in Fig. 4b. This is implemented by applying a control parameter corresponding to the value of the lower temperature setpoint after the change in its value for a given period of time before the desired and programmed change to ensure sufficient preheating. The duration of the preheating is calculated iteratively by predicting the internal temperature resulting from heating at the higher value of the lower temperature setpoint for increasing greater periods of time before the desired change, until such time as the internal temperature rests within the comfort region at all times.

Once the value of Tmod has been calculated, the control device optimises the control parameter based on the tariff information. In the present embodiment, overheating before a tariff change is ensured by setting the control parameter to correspond to the upper setpoint for a given period of time before the tariff change and to a lower limit setpoint for a period after the tariff change, until such time as the predicted temperature falls below the lower setpoint, at which time the control parameter will follow the lower setpoint again. Again, the period of time of maximum heating before the tariff change is gradually extended, and the relative cost of the heating effected in view of the tariff change are compared until a minimum cost solution is found.

Referring to Fig. 4c, the minimum cost solution on this case was found to be that which resulted in the internal temperature rising to a point near to the maximum comfort value at the instant of tariff change. Thereafter, the temperature falls just until the point 42 at which time preheating is in fact started in anticipation of the next change in the lower temperature setpoint. Depending on the relative cost of the tariffs, the external temperature and the time until the next change of the lower setpoint, other control strategies may be prescribed by the optimisation algorithm. For example, the internal temperature may be brought to the maximum permitted value and held at this value for some time before the tariff change. Alternatively, the internal temperature may not reach the maximum value within the comfort region.

In the case of a variable tariff, that is piece wise constant, the optimal control strategy is based on the solution found for the case where the tariff is constant, that is, the preheating parameter Tmod. The events that induce the subsequent modifications are the changes in the tariff and more precisely in the step increases in the tariff. Around each tariff increase, there is a period of preheating, just before the tariff increase, and a period during which the power is completely cut-off, just after the tariff increase. The cut-off period will continue until the predicted evolution of the internal temperature for the case of a variable tariff intersects practically with the evolution of the internal temperature for the case of a constant tariff. This can be translated in the terms of temperature setpoints, by introducing a new control parameter Topt that will handle the tariff optimization.

The setpoint Topt has a special structure. In order to enforce a preheating associated with the tariff increase, the setpoint will be equal to the minimal "no-freeze" setpoint temperature, except for a time interval (to be determined) just before the tariff increase, during which Topt is equal to the maximal admissible comfort temperature.

This temperature setpoint will be responsible for the periods of heating preceding the tariff increases. Thereafter the temperature is forced to follow the evolution predicted with the old control parameter Tmod.

In operation, the central controller calculates the values Tmod and Topt simultaneously over the prediction horizon and, as an output to heating devices, sends a control value Treg corresponding to whichever is the maximum value of the two values at the instant of time corresponding to the present.

The tariff pattern, defined as the sequence of values that the tariff takes over a 24 hour period, is processed in order to select the tariff increases and to construct the initial Topt parameter that contains a predetermined period of time before a tariff increase during which the maximal "overheating" setpoint enforced. Each tariff increase represent an event that is susceptible to modify the control strategy, and these events will be treated sequentially, one after the other.

Each prediction of the internal temperature that is considered as a candidate heating strategy to decrease the cost is compared with the internal temperature associated with the reference strategy that is predicted using an ideal regulation around the Tmod setpoint. This reference prediction will be in fact the same for each improvement in cost sought during several iterations but it is more advantageous to compute it every time than to store it in the memory as, in this application, computational time is less critical than memory. And as will be seen, the prediction horizon will be as short as necessary so that it is not necessary to predict the temperature evolution over the initial horizon of 24 hours each time, but rather an horizon whose length is cut-off when possible.

The internal temperature is then predicted with the new candidate strategy, that is given by an ideal regulation around the maximal value between the old internal temperature prediction resulting from a regulation around Tmod and Topt. This is the prediction that includes the excess heating associated with the tariff increases. At the beginning the two predictions will coincide, until Topt handles for the first time an optimisation event, and the Tint prediction associated will become different from the old temperature prediction, derived from a regulation around Tmod. We continue the prediction, until the two temperature predictions are essentially equal (as the process is stable and sufficiently damped, this will happen very quickly). At a discrepancy of 0.1-0.5°C, the two predictions will be considered to be close enough to interrupt the prediction. The terminating condition is in fact that the all the building temperatures defining the thermal state of the building, i.e. the indoor temperature, but also the structure temperature, are less that this minimal wedge of 0.1-0.5°C.

The next stage of the algorithm is to compare the evaluated costs for each control strategy : the older one when the tariff variations were ignored, and the new one when we have preheated before the tariff increase. The difference between the two costs will be the economy associated with the overheating associated with the tariff increase event. This cost difference will be stored in the memory, and compared with the cost difference that will result from the next modification of the control strategy.

We see that considering the two temperature predictions is advantageous because it allows to interrupt the prediction as soon as there is no more any difference in the thermal states of the two models and therefore no more contribution to the differences between the costs. A criterion for adapting the length of the predictive criterion and of deciding the interruption of the prediction is important because continuing the prediction over a fixed horizon (for instance over a fixed horizon of 24 hours) is time consuming and in any case may not be more accurate.

If the next modification in the control strategy produces a cost difference that is more advantageous than the present one then the next modified control strategy will be preferred and the search will continue. If the next modification in the control strategy will produce a cost difference that is less advantageous than the present one then the search will be terminated and control implemented using the present strategy.

Setpoint optimization takes Tlb as the control parameter and produces Tmod, and tariff optimization takes Tmod and produces Topt. Topt is sent to the local remote device as Treg. If for some reason the calculus is stopped at an intermediary state, the intermediate result (Topt or Tmod) is sent. The closed loop control is achieved by calling the control algorithm that is computing the optimal cost heating strategy at every time sample. Tmod and Topt are remembered from one sampling time to another.

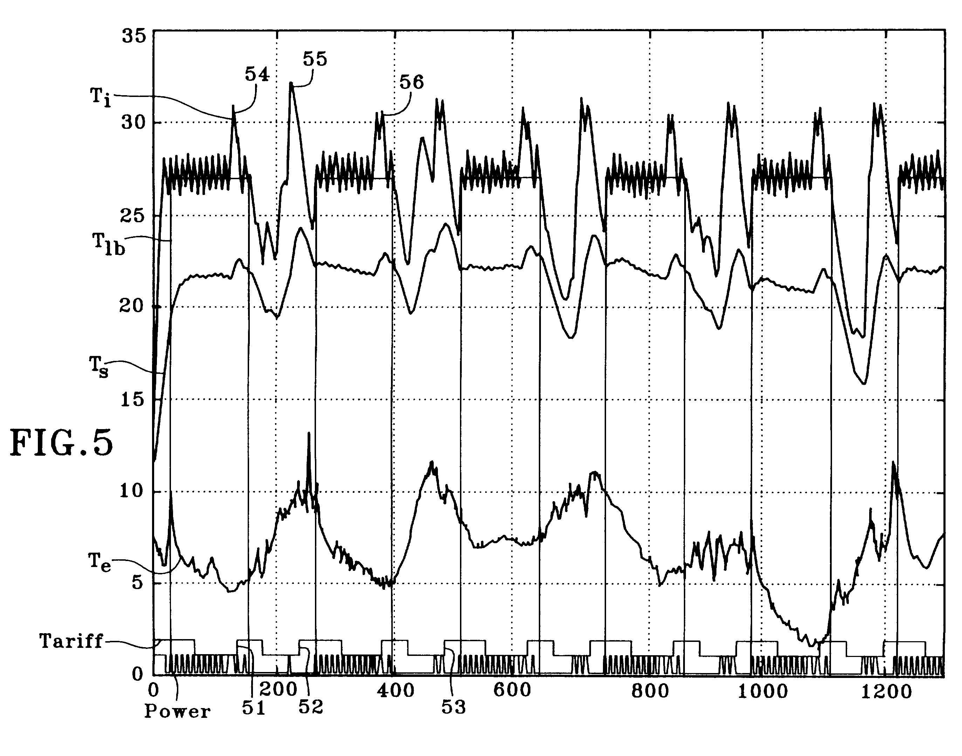

Fig. 5 shows the results of the application of the method according to the present invention in practice. As can be seen, some time before each change from low to high tariff at 51, 52, 53 the power is increased resulting in a peak internal temperature 54, 55, 56. Thereafter the power is cut and the temperature slowly decreases.

## Claims

1. A method of controlling the internal temperature of a building using a central control device (1) and one or more thermal units (2) powered by an energy supply, in which the central control device (1) controls the thermal units (2) in response to a prediction of the internal temperature (Ti) within the building over a period of time, characterised in that the central control device (1) receives information regarding tariff changes in the energy supply and controls the thermal units to maintain the internal temperature between lower and upper temperature setpoints (Tlb, Tub) and according to a control strategy that results in a minimised cost during this period.

2. A method of controlling the internal temperature of a building as claimed in claim 1 in which either or both the lower and upper temperature setpoints (Tib, Tub) are programmable values which may vary over the period of time of prediction performed by the central control device (1).

3. A method of controlling the internal temperature of a building as claimed in claim 1 or 2 in which the central control device (1) transmits a control parameter (Treg) to a thermal unit which represents the desired temperature of the unit.

4. A method of controlling the internal temperature of a building as claimed in claim 3 in which the central control device (1) firstly operates to calculate the internal temperature (Ti) resulting from a control parameter sent to the thermal units representing the low temperature setpoint (Tlb).

5. A method of controlling the internal temperature of a building as claimed in claim 4 in which the central control device (1) recalculates the internal temperature (Ti) using modified values of the first control parameter until such a time as there is no longer any violation of the comfort region defined by the lower and upper setpoints (Tlb, Tub) so as to define a preheating control parameter (Treg).

6. A method of controlling the internal temperature of a building as claimed in claim 5 in which the central control device (1) predicts the effect on the internal temperature (Ti) resulting from sending a control value corresponding to a higher value of the lower temperature setpoint (Tlb) a given period of time before a desired change in the internal temperature (Ti) in order to arrive at a preheating control parameter (Tmod).

7. A method of controlling the internal temperature of a building as claimed in claims 5 or 6 in which the central control device (1) recalculates the predicted internal temperature (Ti) and also the cost to the user for alternative control parameter (Tmod) values starting from the calculated preheating control parameter and using information relating (Treg) to the time and cost of the tariff changes until a control parameter resulting in a minimum or low cost operation of the thermal units is arrived at.

8. A method of controlling the internal temperature of a building as claimed in claim 7 in which the central control device (1), starting from the preheating energy control parameter (Tmod), adjusts this value such that, for a given period of time before a change of tariff from a low to high value, the control value corresponds to the upper temperature setpoint (Tub).

9. A method of controlling the internal temperature of a building as claimed in claim 7 or 8 in which the calculation of the internal temperature (Ti) and cost is only carried out until such a time after the tariff change that the predicted internal temperature of the building is equal to the predicted internal temperature (Ti) for the application of the preheating control parameter (Tmod).

10. A method of controlling the internal temperature of a building as claimed in claim 7 or 8 in which the control device, as part of the prediction of the internal temperature (Ti), also predicts the temperature of the structure of the building (Ts) and in which calculation of the internal temperature and cost is only carried out until such a time after the tariff change that both the predicted internal temperature (Ti) and the predicted temperature (Ts) of the structure of the building are equal to the values resulting from the application of the preheating control parameter (Tmod).

**Patentansprüche**

1. Verfahren zum Steuern der Innentemperatur eines Gebäudes unter Verwendung einer zentralen Steuervorrichtung (1) und einer oder mehrerer mit Energie versorgten Wärmeeinheiten (2), bei dem die zentrale Steuervorrichtung (1) die Wärmeeinheiten (2) als Antwort auf eine über eine Zeitperiode vorhergesagte Innentemperatur (Ti) in dem Gebäude steuert, dadurch gekennzeichnet, daß die zentrale Steuervorrichtung (1) Informationen bezüglich Tarifänderungen für die zugeführte Energie empfängt und die Wärmeeinheiten in der Weise steuert, daß die Innentemperatur zwischen unteren und oberen Temperatureinstellwerten (Tlb, Tub) aufrechterhalten wird, und in Übereinstimmung mit einer Steuerstrategie steuert, die während dieser Periode minimale Kosten zur Folge hat.

2. Verfahren zum Steuern der Innentemperatur eines Gebäudes nach Anspruch 1, bei dem der untere und/oder der obere Temperatureinstellwert (Tlb, Tub) programmierbare Werte sind, die sich während der Zeitperiode der von der zentralen Steuervorrichtung (1) ausgeführten Vorhersage verändern können.

3. Verfahren zum Steuern der Innentemperatur eines Gebäudes nach Anspruch 1 oder 2, bei dem die zentrale Steuervorrichtung (1) einen Steuerparameter (Treg), der die Solltemperatur einer Wärmeeinheit repräsentiert, an diese Einheit überträgt.

4. Verfahren zum Steuern der Innentemperatur eines Gebäudes nach Anspruch 3, bei dem die zentrale Steuervorrichtung (1) zunächst in der Weise arbeitet, daß sie die Innentemperatur (Ti) berechnet, die sich aus einem an die Wärmeeinheiten geschickten und den unteren Temperatureinstellwert (Tlb) repräsentierenden Steuerparameter ergibt.

5. Verfahren zum Steuern der Innentemperatur eines Gebäudes nach Anspruch 4, bei dem die zentrale Steuervorrichtung (1) die Innentemperatur (Ti) unter Verwendung modifizierter Werte des ersten Steuerparameters bis zu einem Zeitpunkt neu berechnet, ab dem der durch die unteren und oberen Einstellwerte (Tlb, Tub) definierte Komfortbereich nicht mehr verlassen wird, wodurch ein Vorheiz-Steuerparameter (Treg) definiert wird.

6. Verfahren zum Steuern der Innentemperatur eines Gebäudes nach Anspruch 5, bei dem die zentrale Steuervorrichtung (1) die Wirkung auf die Innentemperatur (Ti) vorhersagt, die sich aus dem Senden eines einem höheren Wert des unteren Temperatureinstellwertes (Tlb) entsprechenden Steuerwerts eine gegebene Zeitperiode vor einer gewünschten Änderung der Innentemperatur (Ti) ergibt, um einen Vorheiz-Steuerparameter (Tmod) zu erlangen.

**7.** Verfahren zum Steuern der Innentemperatur eines Gebäudes nach den Ansprüchen 5 oder 6, bei dem die zentrale Steuervorrichtung (1) die vorhergesagte Innentemperatur (Ti) und außerdem die Kosten für den Benutzer für alternative Steuerparameterwerte (Tmod) beginnend bei dem berechneten Vorheiz-Steuerparameter (Treg) und unter Verwendung von Informationen bezüglich der Zeit und der Kosten der Tarifänderungen solange neu berechnet, bis ein Steuerparameter zur Folge hat, daß ein Betrieb der Wärmeeinheiten mit minimalen oder niedrigen Kosten erlangt wird.

**8.** Verfahren zum Steuern der Innentemperatur eines Gebäudes nach Anspruch 7, bei dem die zentrale Steuervorrichtung (1) beginnend bei dem Vorheiz-Energiesteuerparameter (Tmod) diesen Wert in der Weise einstellt, daß der Steuerwert während einer gegebenen Zeitperiode vor einer Tarifänderung von einem niedrigen zu einem hohen Wert dem oberen Temperatureinstellwert (Tub) entspricht.

**9.** Verfahren zum Steuern der Innentemperatur eines Gebäudes nach Anspruch 7 oder 8, bei dem die Berechnung der Innentemperatur (Ti) und der Kosten nur bis zu einem Zeitpunkt nach der Tarifänderung ausgeführt wird, ab dem die vorhergesagte Innentemperatur des Gebäudes gleich der vorhergesagten Innentemperatur (Ti) für die Anwendung des Vorheiz-Steuerparameters (Tmod) ist.

**10.** Verfahren zum Steuern der Innentemperatur eines Gebäudes nach Anspruch 7 oder 8, bei dem die Steuervorrichtung als Teil der Vorhersage der Innentemperatur (Ti) außerdem die Temperatur der Struktur des Gebäudes (Ts) vorhersagt, wobei die Berechnung der Innentemperatur und der Kosten nur bis zu einem Zeitpunkt nach der Tarifänderung ausgeführt wird, ab dem sowohl die vorhergesagte Innentemperatur (Ti) als auch die vorhergesagte Temperatur (Ts) der Struktur des Gebäudes gleich den Werten sind, die sich aus der Anwendung des Vorheiz-Steuerparameters (Tmod) ergeben.

## Revendications

**1.** Procédé pour réguler la température interne d'un immeuble en utilisant un dispositif de commande centralisée (1) et une ou plusieurs unités thermiques (2) alimentées par une source d'énergie, dans lequel le dispositif de commande centralisée (1) commande les unités thermiques (2) en réponse à une prévision de la température interne (Ti) à l'intérieur de l'immeuble au cours d'une certaine période de temps, caractérisé en ce que le dispositif de commande centralisée (1) reçoit des informations concernant des changements de tarif dans l'alimentation en énergie et commande les unités thermiques pour maintenir la température interne entre des points de réglage de température inférieur et supérieur (Tlb, Tub) et conformément à une stratégie de commande qui conduit à un coût minimal pendant cette période.

**2.** Procédé pour commander la température interne d'un immeuble selon la revendication 1, dans lequel les points de réglage de température inférieur et supérieur (Tlb, Tub) sont l'un ou l'autre, ou tous deux, des valeurs programmables qui peuvent varier au cours de la période de temps de la prévision réalisée par le dispositif de commande centralisée (1).

**3.** Procédé pour commander la température interne d'un immeuble selon la revendicaticn 1 ou 2, dans lequel le dispositif de commande centralisée (1) transmet à une unité thermique, un paramètre de commande (Treg) qui représente la température souhaitée de l'unité.

**4.** Procédé pour commander la température interne d'un immeuble selon la revendication 1 ou 2, dans lequel le dispositif de commande centralisée (1) a pour fonction, en premier lieu, de calculer la température interne (Ti) résultant d'un paramètre de commande envoyé aux unités thermiques et représentant le point de réglage de température inférieur (Tlb).

**5.** Procédé pour commander la température interne d'un immeuble selon la revendication 4, dans lequel le dispositif de commande centralisée (1) recalcule la température interne (Ti) en utilisant des valeurs modifiées du premier paramètre de commande jusqu'à un instant où il ne se produit plus de violation de la région de confort définie par les points de réglage inférieur et supérieur (Tlb, Tub), de façon à définir un paramètre de commande de préchauffage (Treg).

**6.** Procédé pour commander la température interne d'un immeuble selon la revendication 5, dans lequel le dispositif de commande centralisée (1) prévoit l'effet sur la température interne (Ti) qui résulte de l'envoi d'une valeur de commande correspondant à une valeur plus élevée du point de réglage de température inférieur (Tlb) un certain temps avant une variation souhaitée de la température interne (Ti) afin d'aboutir à un paramètre de commande de préchauffage (Tmod).

7. Procédé pour commander la température interne d'un immeuble selon la revendication 5 ou 6, dans lequel le dispositif de commande centralisée (1) recalcule la température interne prévue (Ti) ainsi que le coût encouru par l'utilisateur pour d'autres valeurs du paramètre de commande (Tmod) à partir du paramètre de commande de préchauffage calculé, et en utilisant des informations reliant (Treg) au temps et au coût jusqu'à ce qu'on aboutisse à un paramètre de commande conduisant à un fonctionnement à coût minimal ou faible des unités thermiques.

8. Procédé pour commander la température interne d'un immeuble selon la revendication 7, dans lequel le dispositif de commande centralisée (1), à partir du paramètre de commande d'énergie de préchauffage (Tmod), ajuste cette valeur de façon que, pendant un temps donné avant un changement de tarif d'une valeur faible à une valeur élevée, la valeur de commande correspond au point de réglage de température supérieur (Tub).

9. Procédé pour commander la température interne d'un immeuble selon la revendication 7 ou 8, dans lequel le calcul de la température interne (Ti) et du coût n'est effectué que jusqu'à un instant consécutif au changement de tarif où la température interne de l'immeuble est égale à la température interne prévue (Ti) pour l'application du paramètre de commande de préchauffage (Tmod).

10. Procédé pour commander la température interne d'un immeuble selon la revendication 7 ou 8, dans lequel le dispositif de commande, en tant que partie de la prévision de la température interne (Ti), prévoit également la température de la structure de l'immeuble (Ts) et dans lequel le calcul de la température interne et du coût n'est effectué que jusqu'à un instant consécutif au changement de tarif où la température interne prévue (Ti) et la température prévue (Ts) de la structure de l'immeuble sont égales aux valeurs résultant de l'application du paramètre de commande de préchauffage (Tmod).

FIG.1

OUT · · · · · IN

state
$T_e$

output
$T_i$

$P_{aux}$

$\frac{-1}{h_e}$

$C_s$

$\frac{-1}{h_i}$

$C_i$

$P$

$T_e$
input 3

## FIG.2

## FIG.3a

$T_{ub}$ 23
$T_{lb}$ 21

## FIG.3b

$T_{ub}$ 23
21
$T_{lb}$ 17

## FIG.3c

$T_{ub}$ 23
21
$T_{lb}$ 17

## FIG.3d

$T_{ub}$ 22.5
$T_{lb}$ 21.5

## FIG.3e

$T_{ub}$ 24
$T_{lb}$ 20

## FIG.4a

$T_{ub}$
Strategy 1(nominal):
Enforcement of the
low setpoint
$T_i$
$T_{lb}$
40

## FIG.4b

$T_{ub}$
Strategy 2:
pre-heating
$T_i$
$T_{lb}$

## FIG.4c

$T_{ub}$
Strategy 3:
heat storage
$T_i$
tariff transition
$T_{lb}$
41    42

EP 0 688 085 B1

FIG.5

EP 0 688 085 B1